(19) Europäisches Patentamt
European Patent Office
Office européen des brevets

(11) **EP 1 055 871 B1**

(12) **EUROPÄISCHE PATENTSCHRIFT**

(45) Veröffentlichungstag und Bekanntmachung des Hinweises auf die Patenterteilung:
**26.04.2017 Patentblatt 2017/17**

(51) Int Cl.:
*F21S 8/00* (2006.01)   *F21V 21/30* (2006.01)
*F21V 5/02* (2006.01)   *F21V 8/00* (2006.01)

(21) Anmeldenummer: **99125647.0**

(22) Anmeldetag: **21.12.1999**

(54) **Innenraumleuchte mit refraktiver Blendungsbegrenzung**

Indoor luminaire with limited refractive glare

Luminaire d'intérieur avec limitation de l'eblouissement refractif

(84) Benannte Vertragsstaaten:
**AT BE CH CY DE DK ES FI FR GB GR IE IT LI LU MC NL PT SE**
Benannte Erstreckungsstaaten:
**SI**

(30) Priorität: **25.05.1999 EP 99110141**

(43) Veröffentlichungstag der Anmeldung:
**29.11.2000 Patentblatt 2000/48**

(73) Patentinhaber: **Siteco Beleuchtungstechnik GmbH**
**83301 Traunreut (DE)**

(72) Erfinder:
• **Belloni, Paola, Dr.**
**83278 Traunstein (DE)**
• **Leibig, Joachim**
**83374 Traunwalchen (DE)**
• **Prodell, Peter**
**83308 Trostberg (DE)**
• **Weinmann, Ansgar**
**83329 Waging (DE)**

(74) Vertreter: **Goddar, Heinz J.**
**Boehmert & Boehmert**
**Anwaltspartnerschaft mbB**
**Patentanwälte Rechtsanwälte**
**Pettenkoferstrasse 20-22**
**80336 München (DE)**

(56) Entgegenhaltungen:
EP-A- 0 819 970   EP-A- 0 846 915
US-A- 5 046 805   US-A- 5 530 628
US-A- 5 808 784   US-A- 5 863 114

**Beschreibung**

Die Erfindung betrifft eine Innenraumleuchte insbesondere eine Innenraumleuchte zum Abhängen von einer Decke oder dgl., mit einem oder mehreren Lichtleitern, die eine eine Lichtaustrittsfläche aufweisende Unterseite aufweisen, einer oder mehreren Lampen, welche in einem jeweils an eine zu der Unterseite des Lichtleiters nicht parallelen Seitenfläche angrenzenden Raumbereich derart angeordnet sind, daß Licht der Lampe bzw. Lampen über diese Seitenfläche in einen Lichtleiter eingekoppelt wird, sowie mit einer refraktiven Lichtauskoppeleinrichtung zum Auskoppeln von Licht aus dem Lichtleiter zum Austritt über die besagte Lichtaustrittsfläche. Eine derartige Innenraumleuchte ist beispielsweise aus EP 0 846 915 A1 bekannt. Bei der aus der EP 0 846 915 A1 bekannten Innenraumleuchte wurden zum Auskoppeln Prismenstrukturen verwendet, wie sie beispielsweise aus US-PS 5 396 350 und US-PS 5 555 109 bekannt sind. Die dort vorgeschlagene Prismenstruktur besteht aus einem Flächenmuster von Mikroprismen, bei dem die einzelnen Mikroprismen durch ein Gitter von Zwischenräumen voneinander getrennt waren und auf allen vier Seiten begrenzte Punkte auf der Lichtaustrittsfläche bildeten. Nachteilig bei diesen Strukturen ist, daß ihre Herstellung aufwendig ist. Hinzu kommt, daß zum Auskoppeln des Lichts pro Mikroprisma nur eine relativ kleine Fläche zur Verfügung steht, und die Zwischenräume zwischen den Mikroprismen, in denen keine Auskopplung stattfindet, einen relativ großen Flächenbereich einnehmen, so daß sich nur eine geringe Auskoppeleffizienz ergibt.

Aus den Druckschriften EP 0 819 970 A1 und US 5 863 114 sind Beleuchtungseinrichtungen für Flachbildschirme bekannt. Diese Beleuchtungseinrichtungen sehen auf einem Lichtleiter eine oder mehrere Prismenplatten vor.

Aus der Druckschrift US 5 046 805 ist eine Beleuchtungseinrichtung mit Lichtwellenleiter bekannt. Mittels einer lichtbrechenden Oberfläche an einer Seite des Wellenleiters wird eine gleichmäßige Lichtabstrahlung an der Lichtaustrittsseite erzeugt.

US 5,530,628 offenbart eine Leuchte, welche zur Beleuchtung einer Schreibtischoberfläche oberhalb der Fläche in einem Möbelstück angeordnet ist. Die Leuchte weist eine Linsenstruktur aus mehreren parallelen Prismen auf, welche dafür sorgen sollen, dass die Lichtverteilung von dem Linsenelement vorzugsweise in Richtung zu der Front der zu beleuchtenden Fläche umgelenkt wird.

Es ist eine Aufgabe der Erfindung, eine Innenraumleuchte der eingangs genannten Art zur Verfügung zu stellen, welche einen höheren Wirkungsgrad aufweist und welche kostengünstiger herzustellen ist.

Erfindungsgemäß wird diese Aufgabe gelöst durch eine Innenraumleuchte nach Anspruch 1, insbesondere eine Leuchte zum Abhängen von einer Decke (Hängeleuchte), mit mindestens einem Lichtleiter, der eine eine Lichtaustrittsfläche aufweisende Unterseite besitzt, einer oder mehreren Lampen, welche in einem an eine zu der Unterseite nicht parallelen Seitenfläche des Lichtleiters angrenzenden Raumbereich derart angeordnet sind, daß Licht der Lampe bzw. Lampen über diese Seitenflächen in den Lichtleiter eingekoppelt wird, sowie mit einer refraktiven Lichtauskoppeleinrichtung zum Auskoppeln von Licht aus dem Lichtleiter zum Austritt über die besagte Lichtaustrittsfläche, welche dadurch gekennzeichnet ist, daß die Lichtauskoppeleinrichtung eine Grenzfläche zwischen zwei Medien mit unterschiedlichen Brechungsindizes aufweist, die mit einer lichtbrechenden Struktur versehen ist, die entsprechend einem vorzugsweise kreuzungsfreien Linienmuster ausgebildet ist, dessen Linie oder Linien einen oder mehrere längliche lichtbrechende Abschnitte auf einander gegenüberliegenden Seiten begrenzen, derart, daß sich in jedem Schnitt entlang einer (nicht notwendig ebenen) Fläche, die senkrecht auf der oder den Linien des Linienmusters steht, mehrere Schnittpunkte der Fläche mit der oder den Linien ergeben, wobei jeweils zwischen zwei Schnittpunkten einer der besagten Abschnitte liegt, wobei die Breite der lichtbrechenden Abschnitte in der Richtung senkrecht zu den Linien kleiner als deren Länge in Richtung der Linien ist und wobei die lichtbrechende Struktur, bezogen auf eine Fläche senkrecht zu der oder den Linien eine Abschirmung des aus_der Grenzfläche austretenden Lichts oberhalb eines Grenzwinkels bezüglich einer Normalen zu der Grenzfläche erzeugt. Vorzugsweise wird dabei in den Flächen parallel zu den Linien im wesentlichen keine Abschirmung oder nur eine Abschirmung bei wesentlich größeren Winkeln erzeugt, so daß die besagte lichtbrechende Struktur im wesentlichen eine Abschirmung des Lichts der Leuchte in einer Richtung bewirkt. Die Abschirmung bewirkt, daß oberhalb des Grenzwinkels die Leuchtdichte unter einen vorgegebenen Grenzwert abfällt, nach der derzeit geltenden deutschen Norm 200 cd/m$^2$. Eine geplante europäische Norm sieht unterschiedliche Grade der Abschirmung vor, die durch Leuchtdichtewerte von 200 cd/m$^2$, 500 cd/m$^2$ und 1000 cd/m$^2$ definiert sind. Durch die Abschirmung wird eine Blendungsbegrenzung erreicht, wie sie insbesondere in den genannten Vorschriften für Bildschirmarbeitsplätze gefordert wird.

Erfindungsgemäß sind die lichtbrechenden Abschnitte, anders als bei den bislang, z. B. gemäß der EP 0 846 915 A1 bekannten Prismen, länglich, d. h. ihre Länge ist deutlich größer als ihre Breite, z. B. mehr als das Dreifache, vorzugsweise mehr als das Zehnfache. Derartige längliche, wellen- oder rippenförmige Strukturen lassen sich wesentlich einfacher herstellen als die bislang verwendeten pyramidenförmigen Strukturen. Sie haben weiterhin den Vorteil, daß die lichtbrechenden Abschnitte einen wesentlich größeren Anteil an der Grenzfläche haben, so daß die Auskoppeleffizienz verbessert wird. Insbesondere kann die lichtbrechende Struktur eine Struktur von lichtbrechenden Abschnitten sein, die entsprechend einem Muster von sich nicht kreuzenden, vorzugsweise parallelen Linien angeordnet sind, welche die lichtbrechenden Abschnitte auf einander gegenüberliegenden Seiten begrenzen. Die Linien, welche die Struktur definieren, sind vorzugsweise parallele gerade Linien. Grundsätzlich sind jedoch auch andere Strukturen denkbar, z.B. eine Struktur, bei der Linien in Form von konzentrischen Kreisen ausgebildet sind oder eine Struktur mit einer einzigen eine Fläche ausfüllenden Linie, z. B. eine Spiralstruktur mit einem spiralförmigen lichtbrechenden Abschnitt.

Insbesondere wird erfindungsgemäß eine Innenraumleuchte, insbesondere eine Hängeleuchte, zur Verfügung gestellt die mindestens zwei Lichtleiter mit einer eine Lichtaustrittsfläche aufweisenden Unterseite und einer oder mehreren Lampen, wobei zumindest an einer zu der Unterseite nicht parallelen Seitenflache jedes der Lichtleiter zumindest eine Lampe derart angeordnet ist daß Licht der Lampe bzw. Lampen über die besagten Seitenflächen der Lichtleiter in diese eingekoppelt wird. Gemäß einer Ausführungsform der Erfindung sind eine oder mehrere Lampen in einem jeweils an eine zu der Unterseite nicht parallele Seitenfläche der beiden Lichtleiter angrenzenden Raumbereich zwischen den beiden Lichtleitern derart angeordnet daß Licht der Lampe bzw. Lampen in die beiden Lichtleiter eingekoppelt wird.

Erfindungsgemäß ist vorgesehen, daß die Lichtauskoppeleinrichtung an einer zweiten Grenzfläche zwischen zwei Medien mit unterschiedlichem Brechungsindizes, die in dem Lichtweg von der ersten Grenzfläche zu der besagten Lichtaustrittsfläche liegt, eine zweite lichtbrechende Struktur aufweist die entsprechend einem Linienmuster, z. B. aus sich nicht kreuzenden, vorzugsweise parallelen Linien angeordnet sind, dessen Linie oder Linien einen oder mehrere längliche lichtbrechende Abschnitte begrenzen, derart, daß sich in jedem Schnitt entlang einer Fläche, die senkrecht auf der oder den Linien des Linienmusters steht, mehrere Schnittpunkte der Fläche mit der oder den Linien ergeben, wobei jeweils zwischen zwei dieser Schnittpunkte einer der besagten Abschnitte liegt, wobei die Breite der lichtbrechenden Abschnitte in der Richtung senkrecht zu den Linien kleiner als deren Länge in Richtung der Linien ist und wobei die zweite Struktur, bezogen auf eine Fläche senkrecht zu der oder den Linien, eine Abschirmung des aus der zweiten Grenzfläche austretenden Lichts oberhalb eines Grenzwinkels bezüglich einer Normalen zu der zweiten Grenzfläche erzeugt und in der Richtung parallel zu den Linien im wesentlichen keine Abschirmung oder nur eine Abschirmung in wesentlich größeren Winkeln erfolgt wobei die Linie oder Linien der zweiten Struktur in einer Projektion auf die Lichtaustrittsfläche die Linie oder Linien der ersten Struktur schneiden, so daß sich in der Projektion ein netzförmiges

Muster ergibt, derart, daß das aus der Lichtaustrittsfläche der Leuchte austretende Licht zumindest in zwei nicht parallelen Ebenen senkrecht zu der Lichtaustrittsfläche jeweils oberhalb eines Grenzwinkels bezüglich einer Normalen zu der Lichtaustrittsfläche, der für die beiden Ebenen verschieden sein kann, abgeschirmt wird. Vorzugsweise stehen die Linien der ersten und zweiten Struktur in der Projektion senkrecht aufeinander. Die Linien der ersten und/oder zweiten Struktur müssen dabei nicht notwendigerweise gerade sein. Denkbar ist z. B., daß die erste Struktur von konzentrischen Kreisen und die zweite Struktur eine Struktur von Linien ist, die in der Projektion sich im Mittelpunkt der Kreise der anderen Struktur schneiden. Ebenso ist denkbar, daß die erste und zweite Struktur zwei gegenläufige Spiralen bilden.

Vorzugsweise können der oder die lichtlenkenden Abschnitte zwischen linienförmigen Vertiefungen der ersten und/oder zweiten Struktur ausgebildet und in Richtung der Linien im wesentlichen gleichförmig sein und insbesondere Prismen sein. Denkbar ist auch eine Struktur mit einem linsenförmigen Querschnitt senkrecht zu der oder den Linien.

Gemäß einer bevorzugten Ausführungsform ist die erste und/oder zweite Struktur entsprechend einem Muster von geraden parallelen kreuzungsfreien Linien aufgebaut, zwischen denen sich Prismen als lichtbrechende Abschnitte befinden, deren Querschnittsprofil im wesentlichen translationsinvariant bezüglich der Richtung der Linien ist.

Gemäß einer besonderen Ausführungsform ist die erste und/oder zweite Grenzfläche eine Grenzfläche zwischen Luft und einem optisch dichteren Medium, wobei die Prismen im Querschnitt im wesentlichen symmetrisch sind und der Prismenwinkel w die folgenden Relationen erfüllt:

$$w/2 \leq C$$

$$w \geq 2\,(2\,\arcsin(1/n) + 90)/3$$

$$\tan(w/2) \leq (n\,\sin(\arcsin(1/n) - 3\,w/2) + \cos(w/2))\,/\,(n\,\cos(\arcsin(1/n) - 3\,w/2) + \sin(w/2)),$$

wobei n der Brechungsindex des zweiten Mediums an der Grenzfläche und C der Abschirmwinkel der Lichtstärkeverteilung an der Grenzfläche ist.

Der Querschnitt der Prismen hat gemäß einer besonderen Ausführungsform die Form eines Polygonzugs. Vorzugsweise haben die Prismen einen dreieckigen Querschnitt. Sie können jedoch auch gekrümmte Seitenwände und/oder eine flache Stirnfläche anstelle einer scharfen Kante aufweisen. Wesentlich ist, daß sie die vorangehend erwähnte Begrenzung des Abstrahlwinkels in der Richtung quer zu den Linien aufgrund von Lichtbrechung bewirken.

Erfindungsgemäß können die erste und zweite Struktur an zwei einander gegenüberliegenden Seiten einer lichtbrechenden Platte ausgebildet sein.

Gemäß einer bevorzugten Ausführungsform der Erfindung ist vorgesehen, daß die Lichtauskoppeleinrichtung zwei einander gegenüberstehende plattenförmige Elemente aufweist, deren Grundflächen parallel zueinander angeordnet sind, wobei die erste Struktur in einer Grundfläche eines ersten plattenförmigen Elementes und die zweite Struktur in einer Grundfläche des zweiten plattenförmigen Elementes ausgebildet ist. Grundsätzlich können auch mehr als zwei geschichtete Platten mit einer lichtbrechenden Struktur vorgesehen sein.

Die beiden Grundflächen mit der ersten bzw. zweiten Struktur können direkt aneinander angrenzen. In diesem Fall bilden die Platten eine Einheit mit den beiden strukturierten Grundflächen in der Mitte und vorzugsweise unstrukturierten, also im wesentlichen glatten Grundflächen auf der Außenseite. Sie können auch jeweils nach außen weisen, so daß die Platten mit den unstrukturierten Flächen aneinander angrenzen. Schließlich ist es auch möglich, daß die beiden strukturierten Grenzflächen beide in dieselbe Richtung weisen, entweder in die Richtung des Lichtaustritts aus der Lichtauskoppeleinrichtung oder die entgegengesetzte Richtung.

Die Erfindung kann einen einer oder mehreren Lampen zugeordneten Reflektor vorsehen, welcher Licht der Lampe bzw. der Lampen teilweise zu der Schmalseite eines Lichtleiters hin zum Einkoppeln in den Lichtleiter reflektiert und teilweise an dem Lichtleiter vorbei nach oben zur Erzeugung eines indirekten Lichtanteils der Leuchte abgibt. Dies entspricht im wesentlichen der in der EP 0 846 915 A1 vorgeschlagenen Technik zur Erzeugung eines indirekten Lichtanteils.

Der oder die Lichtleiter können massive Lichtleiter sein. Bevorzugt ist jedoch, daß zumindest einer der Lichtleiter ein Hohllichtleiter ist, der durch ein Gehäuse mit einem Hohlraum festgelegt ist, dessen Innenwände zumindest teilweise reflektierend sind, der an einer Schmalseite zum Einkoppeln von Licht von einer oder mehreren der Lampen eingerichtet ist, an einer Seite zumindest teilweise durch die Lichtauskoppeleinrichtung begrenzt ist und eine der Lichtauskoppeleinrichtung gegenüberliegende Dachfläche aufweist, die nach innen, also zu dem Hohlraum hin, zumindest teilweise reflektierend ist.

Der Hohlraum kann zu der Lampe hin geschlossen sein und eine Lichteinkoppeleinrichtung zum Einkoppeln von Licht von der Lampe in den Hohlraum aufweisen, im einfachsten Fall eine transparente Wand.

Gemäß einer bevorzugten Ausführungsform ist jedoch vorgesehen, daß der Hohllichtleiter zu der oder den Lampen hin offen ist, so daß Licht von den Lampen direkt, also ohne Lichtbrechung, in den Hohlraum gelangen kann.

Die Verwendung eines Hohllichtleiters hat zahlreiche Vorteile. Insbesondere lassen sich die Reflexionseigenschaften in dem Lichtleiter wesentlich einfacher und besser gestalten als bei einem massiven Lichtleiter. Durch eine Verspiegelung der Dachfläche oder durch eine diffus reflektierende Dachfläche können der Reflexionsgrad erhöht und/oder Mehrfachreflexionen vermieden werden. Während bei einem massiven Lichtleiter das Aufbringen einer unter lichttechnischen Gesichtspunkten befriedigenden lichtbrechenden Struktur zum Auskoppeln aufwendig ist, läßt sich dies bei einem Hohlichtleiter in einfacher Weise dadurch realisieren, daß als Boden ein oder mehrere entsprechend strukturierte Platten eingesetzt werden. Obwohl derzeit zwei derartige Platten bevorzugt sind, können durchaus auch mehr derartige Platten mit unterschiedlichen Strukturen vorgesehen werden, um die Lichtabstrahlcharakteristik zu beeinflussen, insbesondere um den Abstrahlwinkel in verschiedenen Ebenen zu begrenzen. Wenn eine Abschirmung nur in eine Richtung beabsichtigt ist, kann auch nur eine einzige Platte mit einer entsprechenden Strukturierung verwendet werden.

Die Hohllichtleitertechnik eröffnet jedoch auch eine alternative Möglichkeit, um einen indirekten Lichtanteil aus dem Lichtleiter auszukoppeln.

Erfindungsgemäß ist hierfür vorgesehen, daß die Dachfläche teilweise Licht aus dem Hohlraum in die zu der Lichtaustrittsfläche entgegengesetzte Richtung zur Abgabe eines indirekten Lichtanteils auskoppelt.

Hierfür kann die Dachfläche teilweise transparent und teilweise reflektierend ausgebildet sein. Um die indirekte Lichtabgabe zu kontrollieren und insbesondere einen ausreichenden direkten Lichtanteil zu erhalten, kann auch vorgesehen sein, daß die Dachfläche abschnittsweise ganz oder teilweise transparent und abschnittsweise im wesentlichen vollständig reflektierend ist.

Eine teilweise Transparenz kann beispielsweise dadurch realisiert werden, daß die Dachfläche ganz oder teilweise als halbdurchlässiger Spiegel ausgebildet ist.

Ebenfalls kann vorgesehen sein, daß die Dachfläche eine lichtbrechende Struktur zum Auskoppeln von Licht in die der Lichtaustrittsfläche entgegengesetzte Richtung aufweist. Diese lichtbrechende Struktur kann eine Mikroprismenstruktur sein, wie sie aus der US-PS 5 396 350 oder der US 5 555 109 bekannt ist, oder auch eine Struktur, wie sie zum Lichtauskoppeln an der Lichtaustrittsfläche an der Unterseite des Lichtleiters vorgesehen ist.

Eine weitere Möglichkeit zur Lichtauskoppelung an der Dachfläche für eine diffuse Beleuchtung, beispielsweise einer Decke, kann auch darin bestehen, daß die Dachfläche durch eine entsprechende Strukturierung, z.B. Aufrauhen oder dgl., transparent streuend ausgebildet wird.

Alternative oder ergänzend kann vorgesehen sein, daß die Dachfläche teilweise aus einem klaren Material mit einem hohen Transmissionsgrad besteht und/oder teilweise aus einem vollständig oder überwiegend reflektierenden Material besteht.

Insbesondere kann vorgesehen sein, daß in der Dachfläche im wesentlichen ausschließlich transmittierende und im wesentlichen ausschließlich reflektierende Abschnitte vorgesehen sind.

Es hat sich gezeigt, daß die Lichtstärke für kleine Winkel zur Senkrechten vergrößert wird, wenn die Dachfläche ganz oder abschnittsweise diffus reflektierend ausgebildet ist.

Bei Anwendung der erfindungsgemäßen Lehre hat sich gezeigt, daß eine größere Lichtstärke bei kleinen Winkeln erreicht werden kann, wenn die Höhe des Hohlraums in einem Schnitt senkrecht zu der Lampenachse sich zumindest in einem Teilabschnitt in der Richtung weg von einer Lampe bzw. den Lampen verringert.

Insbesondere bei Leuchten mit einseitiger Lichteinstrahlung ist es dabei vorteilhaft, wenn die Höhe des Hohlraums, ausgehend von der der Lampe zugewandten Schmalseite, sich in der Richtung von dieser Schmalseite weg zu einer gegenüberliegenden Schmalseite hin monoton verringert, wobei "monoton verringern" in dem Sinn zu verstehen ist, daß die Höhe sich zumindest abschnittsweise verringert und in den übrigen Abschnitten zumindest konstant bleibt. Bei einer Leuchte mit einer einseitigen Lichteinstrahlung ist es für eine bessere Lichtausnutzung vorteilhaft, wenn die gegenüberliegende Schmalseite reflektierend ausgebildet ist.

Insbesondere bei Leuchten, bei denen an einander gegenüberliegenden Schmalseiten Lampen angeordnet sind, die Licht in den Hohlleiter einstrahlen, ist es vorteilhaft, wenn die Höhe des Hohlraums in einem Schnitt senkrecht zu der Lampenachse, ausgehend von einer Schmalseite, in Richtung zu der gegenüberliegenden Schmalseite hin in einem ersten Teilabschnitt abnimmt und danach in einem zweiten Teilabschnitt zunimmt.

Bevorzugterweise hat dabei die Dachfläche eine im wesentlichen konkave Struktur, d.h. sie bildet in einem Teilabschnitt eine Vertiefung zwischen den beiden Schmalseiten. Grundsätzlich kann jedoch auch - alternativ oder ergänzend - die Lichtaustrittsfläche im wesentlichen konkav ausgebildet sein, was aus Designgründen vorteilhaft sein kann.

Eine Reihe von Gestaltungsformen haben sich hinsichtlich einer Optimierung der Lichtstärkeverteilungskurve als vorteilhaft herausgestellt. Gemäß einer ersten Klasse von Gestaltungsformen weist der Hohlraum einen Bereich mit im wesentlichen konstanter minimaler Höhe zwischen den beiden Schmalseiten auf, der vorzugsweise in der Mitte zwischen den beiden Schmalseiten liegt. Es hat sich herausgestellt, daß mit derartigen Hohlraumgestaltungen der Leuchtenbetriebswirkungsgrad deutlich erhöhen läßt.

Dabei kann insbesondere vorgesehen sein, die Dachfläche und/oder die ihr gegenüberliegende Fläche des Hohlraums im Querschnitt die Form eines Polygonzugs aufweist, wobei dieser Polygonzug vorzugsweise, jedoch nicht notwendig einen Bereich mit im wesentlichen konstanter minimaler Höhe zwischen den beiden Schmalseiten, wie vorangehend erwähnt, aufweisen kann. Insbesondere kann vorgesehen sein, daß die Dachfläche aus zwei schräg in den Hohlraum des Hohllichtleiters abfallenden Schrägflächen besteht, die unmittelbar aneinander angrenzen.

Gemäß einer weiteren Ausführungsform kann vorgesehen sein, daß die Dachfläche und/oder die ihr gegenüberliegende Fläche im Querschnitt konvex gekrümmte Teilabschnitte aufweist, in denen sich die Höhe in der Richtung von den Schmalseiten zu der Mitte des Hohlraums hin verringert und die vorzugsweise durch einen Abschnitt mit konstanter Höhe oder einen anderen Abschnitt getrennt sind. Die konvexen Teilabschnitte können jedoch auch an ihrem tiefsten Punkt aneinander anschließen, so daß sich eine schwingenförmige Struktur oder Teilstruktur ergibt.

Weiterhin kann vorgesehen sein, daß die Dachfläche und/oder die ihr gegenüberliegende Fläche im Querschnitt ganz oder teilweise konkav gekrümmt ausgebildet ist, wobei vorzugsweise die Dachfläche einen nach innen gewölbten Bogen zwischen den beiden Schmalseiten des Hohllichtleiters bildet. Es kann auch vorgesehen sein, daß die Dachfläche und/oder die ihr gegenüberliegende Fläche, ausgehend von den beiden Schmalseiten des Hohllichtleiters, jeweils einen konkav gekrümmten Teilabschnitt aufweisen, wobei diese beiden konkav gekrümmten Teilabschnitte an ihrem von der jeweiligen Schmalseite abgewandten Ende durch einen vorzugsweise geraden Zwischenabschnitt verbunden sind.

Gemäß einer besonderen Ausführungsform der Leuchte ist vorgesehen, daß in der Nähe von zwei einander gegenüberliegenden Schmalseiten jeweils eine oder mehrere Lampen angeordnet sind, welche über diese Schmalseite Licht in den Hohlraum einkoppeln, wobei vorzugsweise die Höhe des Hohlraums in einem Bereich zwischen den Lampen soweit verringert ist, daß eine Direkteinstrahlung einer Lampe auf den Lichteinkoppelbereich einer gegenüberliegenden Lampe verhindert oder zumindest reduziert wird.

Weitere Merkmale und Vorteile der Erfindung ergeben sich aus der nachfolgenden Beschreibung von Ausführungsbeispielen der Erfindung anhand der beigefügten Zeichnungen.

Fig. 1          zeigt schematisch ein erstes Ausführungsbeispiel einer erfindungsgemäßen Innenraumleuchte,

Fig. 2          zeigt einen Querschnitt der Leuchte gemäß Fig. 1 senkrecht zu der Lampenachse und illustriert den Strahlengang in dem Hohllichtleiter,

Fig. 3          zeigt eine perspektivische Ansicht der beiden rillenförmig strukturierten Prismenplatten zum Auskoppeln von Licht aus dem Lichtleiter,

Fig. 4          ist eine Schnittansicht der Prismenplatten gemäß Fig. 3 entlang der Linie IV - IV,

Fig. 5          ist eine Schnittansicht der beiden Prismenplatten gemäß Fig. 3 entlang der Linie V - V,

Fig. 6          zeigt schematisch ein zweites Ausführungsbeispiel der erfindungsgemäßen Leuchte,

Fig. 7          zeigt schematisch ein erstes vorteilhaftes Querschnittsprofil eines Hohllichtleiters bei einer erfindungsgemäßen Leuchte,

Fig. 8          zeigt schematisch ein zweites vorteilhaftes Querschnittsprofil eines Hohllichtleiters bei einer erfindungsgemäßen Leuchte,

Fig. 9          zeigt schematisch ein drittes vorteilhaftes Querschnittsprofil eines Hohllichtleiters bei einer erfindungsgemäßen Leuchte,

Fig. 10         zeigt schematisch ein viertes vorteilhaftes Querschnittsprofil eines Hohllichtleiters bei einer erfindungsgemäßen Leuchte,

Fig. 11         zeigt schematisch ein fünftes vorteilhaftes Querschnittsprofil eines Hohllichtleiters bei einer erfindungsgemäßen Leuchte,

Fig. 12         zeigt schematisch ein sechstes vorteilhaftes Querschnittsprofil eines Hohllichtleiters bei einer erfindungsgemäßen Leuchte,

Fig. 13         zeigt schematisch eine weitere Ausführungsform einer erfindungsgemäßen Leuchte,

Fig. 14         zeigt schematisch einen Querschnitt eines Hohllichtleiters mit einer refraktiven Lichtauskoppeleinrichtung für den Indirektanteil.

Fig. 15 - Fig. 19    zeigen schematisch Beispiele weiterer Ausführungsformen der erfindungsgemäßen Leuchte.

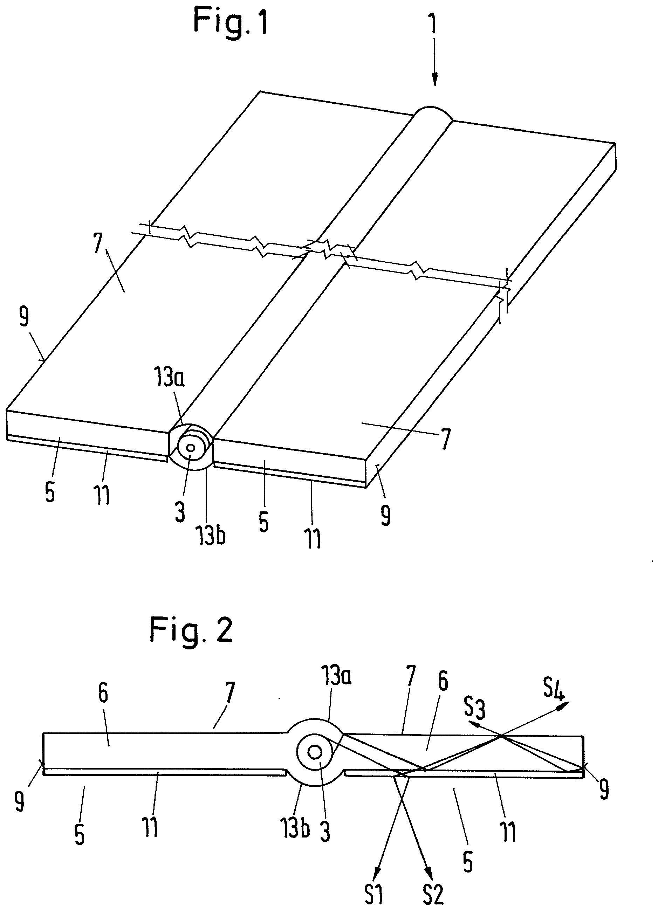

Fig. 1 zeigt ein erstes Ausführungsbeispiel einer erfindungsgemäßen Leuchte, die insbesondere als Hängeleuchte ausgebildet sein kann und allgemein mit 1 bezeichnet ist. Bei dieser Leuchte 1 ist eine Leuchtstofflampe 3 in der Mitte zwischen zwei Hohllichtleitern 5 mit einem Hohlraum 6 angeordnet, der, wie aus Fig. 2 ersichtlich, auf der der Lampe 3 zugewandten Schmalseite offen ist. Der Hohlraum 6 wird oben durch eine teilweise reflektierende Dachfläche 7, seitlich durch reflektierende Seitenwände 9 und unten durch eine Lichtauskoppeleinrichtung 11 begrenzt, welche nachfolgend näher beschriebene lichtbrechende Strukturen zum Auskoppeln von Licht aus dem Hohllichtleiter 5 aufweist. Die Lampe 3 ist oben und unten von einem Reflektor 13a bzw. 13b umgeben, welcher vorzugsweise so ausgestaltet ist, daß das Licht der Lampe 3 nahezu vollständig in die beiden Hohllichtleiter 5 eingekoppelt wird.

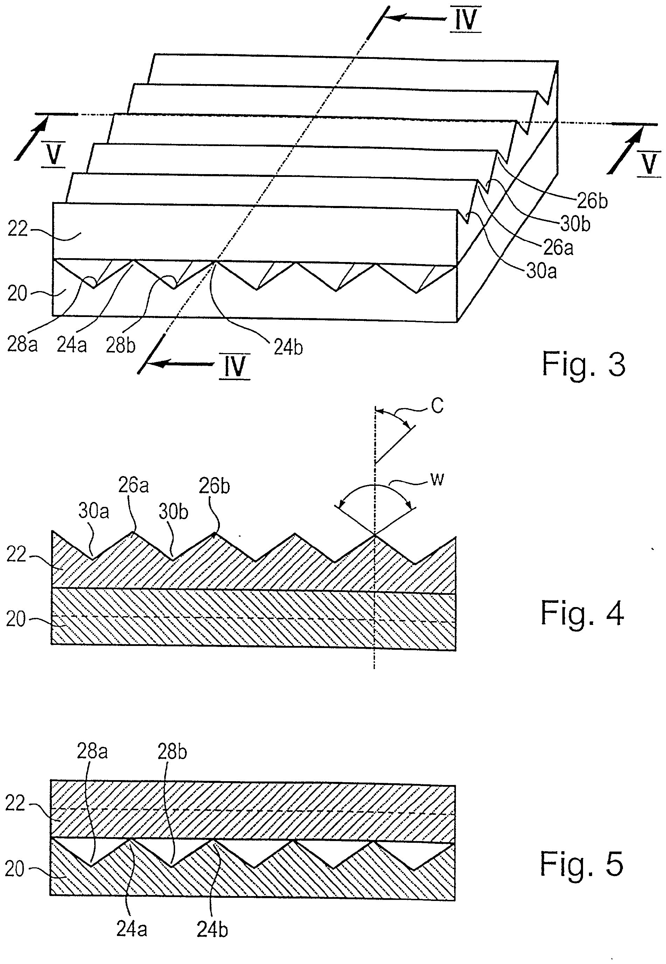

Die Lichtauskoppeleinrichtung 11 ist in den Figuren 3 bis 5 perspektivisch bzw. im Schnitt näher dargestellt. Sie besteht aus zwei Platten 20 und 22, die jeweils an der der Seite des Lichteinfalls gegenüberliegenden Seite eine Prismenstruktur mit satteldachförmigen Prismen 24a, 24b ... bzw. 26a, 26b, ... (nachfolgend kollektiv mit 24 bzw. 26 bezeichnet) versehen sind, die durch gerade rinnenförmige Vertiefungen 28a, 28b ... bzw. 30a, 30b, ... (nachfolgend kollektiv mit 28 bzw. 30 bezeichnet) voneinander getrennt sind. Dabei stehen die Kantenlinien der Prismen 24 bzw. die Vertiefungen 28 senkrecht zu den Kantenlinien der Prismen 26 bzw. den Vertiefungen 30. Der besseren Anschaulichkeit halber sind die Prismenplatten in Fig. 3 bis 5 so dargestellt, daß die Prismen, die im Einsatz nach außen, also zur Lichtaustrittsseite hin liegen, nach oben gerichtet dargestellt ist. Die Breite der Prismen beträgt gemäß den derzeit bevorzugten Ausführungsformen ca 0,01 mm bis 40 mm, bevorzugt 0,05 mm bis 10 mm und besonders bevorzugt 0,1 mm bis 5 mm. Die Platten 20 und 22 bestehen aus einem leicht bearbeitbaren lichtdurchlässigem Material, z.B. Acrylglas oder Polycarbonat.

Die Prismenstrukturen der Platten 20 bzw. 22 legen jeweils den Abschirmwinkel der Leuchte in der Ebene senkrecht zu den Kantenlinien der Prismen 24 bzw. 26 bzw. den Vertiefungen dazwischen fest. Dabei bestehen zwischen dem Prismenwinkel w und dem Abschirmwinkel C in der Ebene senkrecht zu den Kantenlinien der Mikroprismen (vgl. Fig. 4), wenn der Hohlraum 6 mit Luft gefüllt ist, die folgenden Relationen:

$$w/2 \leq C$$

$$w \geq 2 \, (2 \arcsin(1/n) + 90)/3$$

$$\tan(w/2) \leq (n \, \sin(\arcsin(1/n) - 3 \, w/2) + \cos(w/2)) \, / \, (n \, \cos(\arcsin(1/n) - 3 \, w/2) + \sin(w/2)),$$

wobei n der Brechungsindex der Platte 20 bzw. 22 ist. Aufgrund der senkrecht zueinanderstehenden Prismenstrukturen ergibt sich eine einwandfreie Entblendung sowohl in Längs- als auch in Querrichtung, wobei der Abschirmwinkel C für die beiden Richtungen durch eine geeignete Wahl des Prismenwinkels w unterschiedlich für die beiden Prismenstrukturen 24 und 26 gewählt werden kann.

Anstelle von orthogonalen rillenförmigen Prismenstrukturen sind auch andere linienförmige Prismenstrukturen mit orthogonal aufeinanderstehenden Linien denkbar, z.B. kreisförmige Rillen bzw. Prismen in einer Struktur und sternförmig von dem Kreiszentrum ausgehenden Rillen mit dazwischenliegenden Prismen in der anderen Struktur, die auf allen Kreisrillen senkrecht stehen. Die Orientierung der Prismenstrukturen 24 und 26 kann von der in den Figuren 3 bis 5 dargestellten Orientierung abweichen. Beide Prismenstrukturen können beispielsweise in die gleiche Richtung weisen, so daß eine der Prismenstrukturen an der ebenen Fläche der anderen Platte aufsteht oder die Prismenstrukturen können auch direkt aneinander angrenzen.

Die Wirkungsweise des Hohllichtleiters ist in Fig. 2 anhand beispielhafter Strahlengänge illustriert. Für einen Teil der Lichtstrahlen (vgl. Lichtstrahl S1) wird das direkt auf die Lichtauskoppeleinrichtung 11 einfallende Licht über die Prismen 24 und 26 direkt ausgekoppelt. Für einen weiteren Teil des Lichts (vgl. Strahl S2) wird das Licht an der Prismenstruktur in den Hohlraum 6 hinein zurückreflektiert, anschließend an der Dachfläche 7 und der Seitenwand 9 reflektiert und gelangt dann wieder mit einem geeigneten Einfallswinkel zu der Lichtauskoppeleinrichtung 11, wo es durch die Prismenstrukturen 24 und 26 ausgekoppelt wird. Die Dachfläche 7 ist nicht vollständig reflektierend ausgebildet, sondern vielmehr teilweise transparent, so daß ein Teil des in dem Hohllichtleiter 5 umlaufenden Lichts an der Dachfläche ausgekoppelt wird, was durch Teillichtstrahlen S3 und S4 angedeutet ist. Die Dachfläche 7 kann diffus streuend ausgebildet sein, sie kann aber auch eine Lichtauskoppeleinrichtung ähnlich der Lichtauskoppeleinrichtung 11 aufweisen. Es kann auch vorgesehen sein, daß sie abschnittsweise vollständig reflektierend und abschnittsweise teilweise oder vollständig transparent ist. Sie kann insbesondere auch ganz oder teilweise hochglänzend ausgebildet sein. Die geeignete Wahl der Dachfläche 7 hängt davon ab, welche Lichtstärkeverteilung man für den Indirektanteil wünscht. Für eine möglichst wenig variierende Lichtstärkeverteilung ist eine diffus oder teilweise diffus streuende Dachfläche sinnvoll, während dann, wenn eine bestimmte Vorzugsrichtung für den Indirektanteil gewünscht ist, eine lichtbrechende lichtlenkende Struktur, beispielsweise eine Prismenstruktur, vorteilhaft ist, da sich dadurch die Lichtstärkeverteilungskurve gezielt beeinflussen läßt.

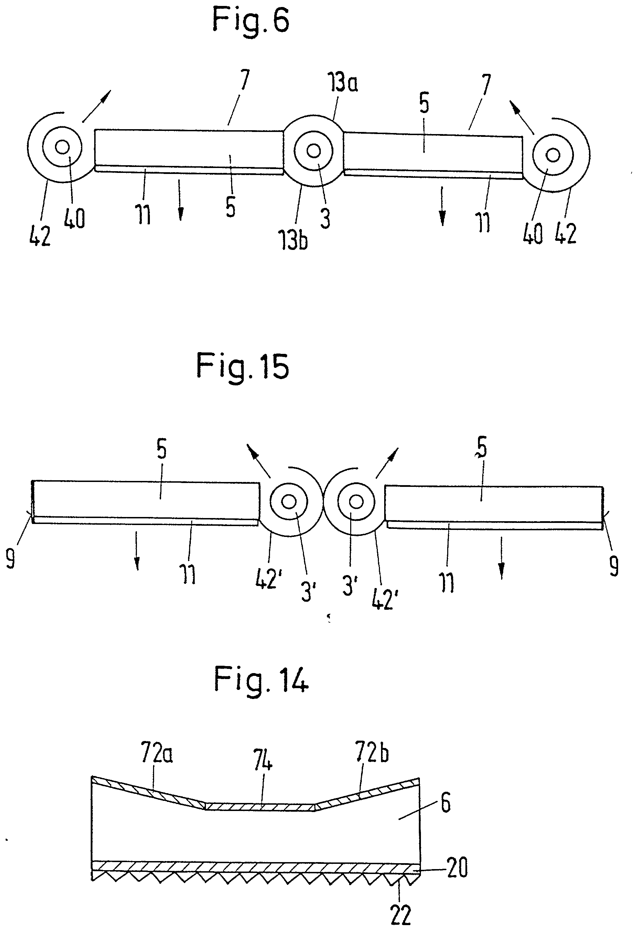

Eine weitere Ausführungsform der Erfindung mit mehreren Lampen ist schematisch in Fig. 6 dargestellt. Dort ist an den beiden äußeren Schmalseiten der Lichtleiter 5 jeweils eine weitere Leuchtstofflampe 40 angeordnet, welche von außen Licht in den Hohllichtleiter 5 einkoppelt. Wie vorangehend mit Bezug auf Fig. 2 beschrieben, koppeln die beiden Lichtauskoppeleinrichtungen 11 einen Teil des Lichts der Lampen 3 und 40 direkt aus und reflektieren einen weiteren Teil des Lichts zu der Dachfläche 7, wo er wiederum teilweise als indirekter Lichtanteil nach oben austritt und teilweise in den Hohlraum 6 zurückreflektiert wird. Die Lampen 40 sind von Reflektoren 42 zum Einkoppeln von Licht in die Hohllichtleiter 5 umgeben. Gleichzeitig sind diese Reflektoren 42 jedoch auch so ausgebildet, daß ein Teil des Lichts der Lampen 40 nach oben schräg an dem Hohllichtleiter 5 vorbei als Indirektanteil abgestrahlt wird. Dies kann durch eine geeignete reflektierende Ausgestaltung, durch eine teilweise Ausbildung der Reflektoren 42 als Lochbleche oder in anderer geeigneter Weise realisiert werden. Dies entspricht der Lichtauskoppelung des Indirektanteils gemäß der EP 0 846 915 A1, auf die hinsichtlich weiterer Möglichkeiten der Auskopplung des indirekten Lichtanteils und der Gestaltung der Reflektoren 42 verwiesen wird.

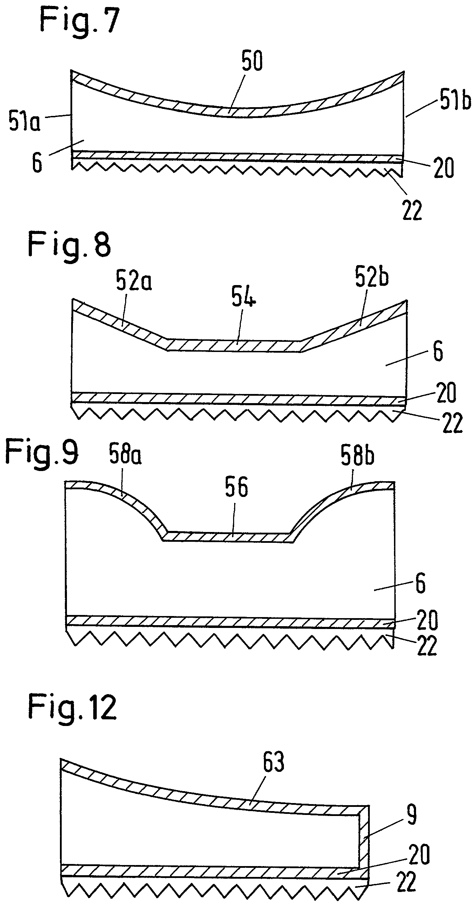

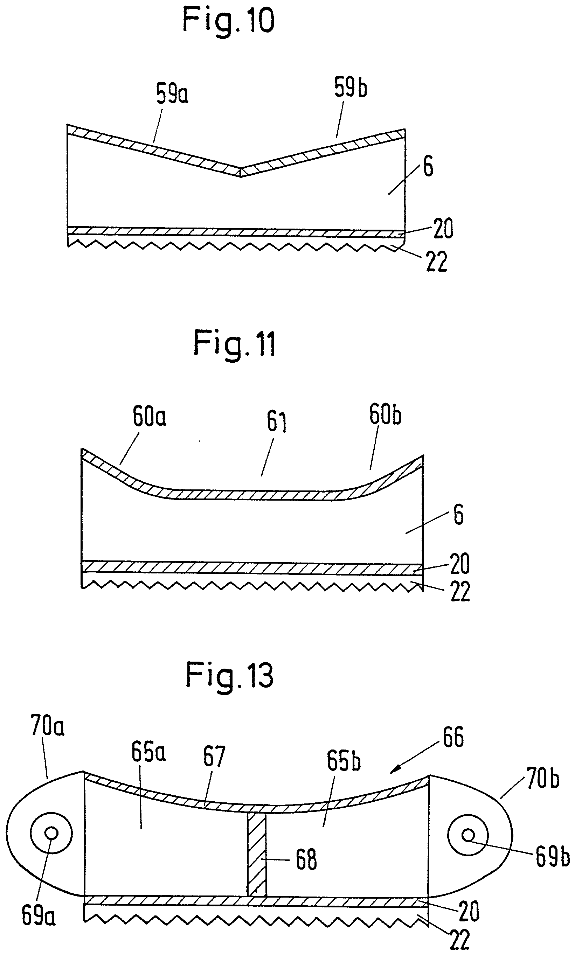

Zur Verbesserung des Leuchtenwirkungsgrades und durch Vergleichmäßigung der Lichtverteilung ist gemäß einer Abwandlung dieser Ausführungsform vorgesehen, daß sich der Hohlraum 6, ausgehend von einer Schmalseite, an der sich eine Lampe 3 oder 40 befindet, verjüngt. Beispiele hierfür sind in den Figuren 7-10 dargestellt, wobei die Hohlraumprofile, die in den Figuren 7-9 dargestellt sind, sich besonders für eine Ausführungsform eignen, bei der von zwei Seiten in den Hohlraum 6 Licht eingestrahlt wird, wie in Fig. 6 dargestellt, während die Querschnittsform der Fig. 12 für eine einseitige Lichteinstrahlung, wie bei dem Ausführungsbeispiel der Fig. 1, bevorzugt ist. Bei dem Ausführungsbeispiel gemäß Fig. 7 hat die Dachwand 50 eine konkav gekrümmte Form und bildet zwischen den beiden Schmalseiten 51a, 51b eine durchgängig nach innen gewölbte Fläche. Bei der Ausführungsform der Fig. 8 hat die Dachfläche die Form eines Polygonenzugs mit zwei schräg nach innen geneigten Flächen 52a und 52b und einer zentralen waagrechten Fläche 54, die einen minimalen Abstand zu der Lichtauskoppeleinrichtung aufweist. Bei dem Ausführungsbeispiel gemäß Fig. 9 besteht die Dachfläche aus einem waagrechtem Abschnitt 56, welcher den Bereich minimaler Höhe des Hohlraums 6 festlegt, und nach außen und oben geschwungenen Abschnitten 58a und 58b. Fig. 10 zeigt eine Abwandlung der Ausführungsform gemäß Fig. 8. Bei dieser Ausführungsform entfällt die zentrale waagerechte Fläche 54 und die beiden Schrägflächen 59a und 59b schließen unmittelbar aneinander an, so daß sich eine Dreiecksform ergibt. Das Ausführungsbeispiel der Fig. 11 ist ähnlich demjenigen der Fig. 9, wobei jedoch die konvexen Dachabschnitte 58a und 58b durch konkave Dachabschnitte 60a und 60b ersetzt sind, die durch eine waagerechte Fläche 61 miteinander verbunden sind. Durch eine geeignete Wahl der Krümmung eines konkaven Dachabschnitts 50 oder 60a, 60b (Fig. 7 oder 11) oder von konvexen Abschnitten 58a, 58b (Fig. 8), der Breite eines zentralen waagrechten Abschnitts 54, 56 oder 61 (Fig. 7, 8 und 11) und der Neigung von schräggestellten Dachabschnitten 52a, 52b bzw. 59a, 59b läßt sich die Lichtstärkeverteilungskurve, insbesondere hinsichtlich der Lage und der Stärke der Maxima modellieren. Den Ausführungsformen gemäß Fig. 7 bis 11 ist gemeinsam, daß in der Mitte ein Punkt oder Abschnitt minimaler Höhe liegt, der die Abstrahlung von Licht der Lampen 3 bzw. 40 über die jeweils gegenüberliegende offene Schmalseite 51 begrenzt oder verhindert.

Fig. 12 zeigt eine Querschnittsform, die für eine einseitige Lichteinstrahlung geeignet ist. Hierfür ist die der Lampe 3 gegenüberliegende Schmalseite durch eine reflektierende Wand 9 verschlossen. Insgesamt hat der Hohllichtleiter 5 eine keilförmige, sich zu der Seite 9 hin kontinuierlich verjüngende Struktur. Auch hier kann durch eine geeignete Gestaltung der Dachfläche 63 und des Übergangsbereichs zu der Seitenwand 9 die Lichtstärkeverteilungskurve modelliert werden.

Fig. 13 zeigt eine weitere Ausführungsform einer erfindungsgemäßen Leuchte, bei der zwei Hohllichtleiter 65a und 65b einstückig in einem einzigen Bauteil 66 ausgebildet sind. Dieses Bauteil weist eine konkav gekrümmte Dachfläche 67 auf, welche den Prismenplatten 20 und 22, ähnlich wie bei dem Hohllichtleiter gemäß Fig. 7, gegenübersteht, wobei jedoch der Raumbereich zwischen der Dachfläche und den Prismenplatten 20 und 22 durch eine Trennwand 68 in die besagten zwei Hohllichtleiter 65a und 65b unterteilt ist. Jedem der beiden Hohllichtleiter 65a und 65b ist eine Lampe 69a bzw. 69b mit einem dazugehörigen Reflektor 70a bzw. 70b zugeordnet, welche, wie vorangehend beschrieben, jeweils Licht über eine Schmalseite in den jeweiligen Hohllichtleiter einkoppelt. Diese Ausführungsform dupliziert also gewissermaßen eine Leuchte mit einem Hohllichtleiter gemäß Fig. 12. Selbstverständlich kann eine Trennwand ähnlich wie Trennwand 68 auch bei den anderen Ausführungsformen der erfindungsgemäß vorgesehenen Hohllichtleiter gemäß Fig. 7 bis 11 eingesetzt werden bzw. diese Ausführungsformen könnten dahingehend modifiziert werden, daß der Hohllichtleiter gewissermaßen nur die Hälfte eines Hohllichtleiters gemäß Fig. 7 bis 11 darstellt und an dem von der Lampe abgewandten Ende durch eine Abschlußwand verschlossen ist, ähnlich wie dies im Verhältnis zwischen Fig. 7 und Fig. 12 der Fall ist. Während bei der in Fig. 13 dargestellten Ausführungsform der erfindungsgemäßen Leuchte nur ein einziger Körper 66 mit zwei Hohllichtleitern 65a und 65b zwischen zwei Lampen angeordnet ist, die somit an den Außenseiten der Leuchte liegen, kann erfindungsgemäß auch vorgesehen sein, ähnlich wie bei der Ausführungsform gemäß Fig. 6 zwei derartige Körper nebeneinander anzuordnen und sowohl an den Außenseiten als auch an der Schmalseite zwischen den Körpern 66 jeweils eine oder mehrere Lampen, entsprechend den Lampen 3 und 40 in Fig. 6, vorzusehen.

Fig. 14 zeigt beispielhaft eine Abwandlung der Ausführungsform gemäß Fig. 8, bei der die geneigten Abschnitte 72a, 72b vollständig diffus oder spiegelnd reflektierend ausgebildet sind und der waagerechte zentrale Abschnitt mit einer lichtauskoppelnden Prismenstruktur 74 versehen ist, um einen Teil des Lichts in dem Hohlraum 6 als indirekten Lichtanteil nach oben auszukoppeln. Dieses Beispiel illustriert auch, wie man den Indirektanteil, der aus dem Hohlraum 6 augekoppelt wird, dadurch kontrollieren kann, daß man Abschnitte mit unterschiedlichen Reflexions- bzw. Transmissionseigenschaften vorsieht.

Die Ausführungsformen der erfindungsgemäßen Leuchte gemäß den Figuren 15 bis 19 entsprechen in der EP 0 846 915 A1 vorgeschlagenen Ausführungsformen der dort beschriebenen Innenraumleuchte, mit dem Unterschied, daß die Lichtauskoppeleinrichtung 5 durch zwei Platten mit linienförmigen Prismenstrukturen, wie vorangehend beschrieben, anstatt mit punktförmigen Prismen gebildet wird und bei den dargestellten Ausführungsformen anstelle eines massiven Lichtleiters, wie in der EP 0 846 915 A1 vorgeschlagen, ein Hohllichtleiter verwendet wird. Daher werden diese Ausführungsformen nachfolgend nur kurz beschrieben. Hinsichtlich weiterer Einzelheiten wird auf die EP 0 846 915 A1 verwiesen.

Fig. 15 zeigt eine Abwandlung der Ausführungsform der Fig. 1, bei der jedem Hohllichtleiter 5 eine Lampe 3' zugeordnet ist, die ausschließlich in den ihr zugeordneten Hohllichtleiter Licht einkoppelt. Die Lampen 3' sind von Reflektoren 42' umgeben, welche entsprechend den Reflektoren 42 des Ausführungsbeispiels der Fig. 6 ausgebildet sind und einen Teil des Lichts der Lampen 3' direkt nach oben an dem Hohllichtleiter 5 vorbei als Indirektanteil auskoppeln.

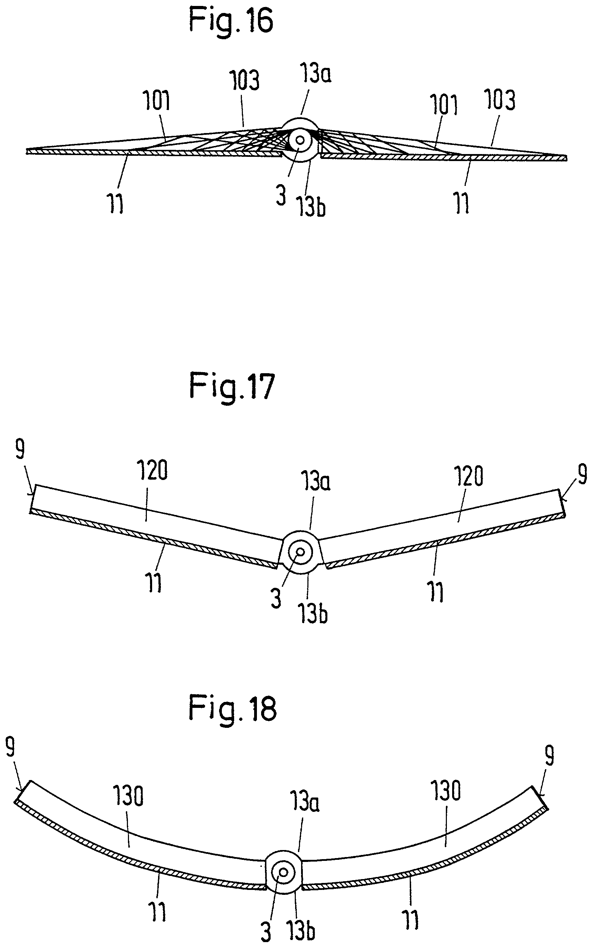

Bei der Ausführungsform gemäß Fig. 16 haben die Hohllichtleiter 101 eine dreieckige Keilform mit einer geraden Dachfläche 103 und einer Lichtauskoppeleinrichtung 5, die aus ebenen strukturierten Platten wie vorangehend beschrieben besteht.

Gemäß dem Ausführungsbeispiel der Fig. 17 sind die Hohllichtleiter 120 schräg zu der Vertikalen angestellt und sind vorzugsweise um eine Achse parallel zur Lampenachse verschwenkbar angeordnet.

Gemäß dem Ausführungsbeispiel der Fig. 18 sind die Hohllichtleiter 130 nach oben und außen gewölbt ausgebildet.

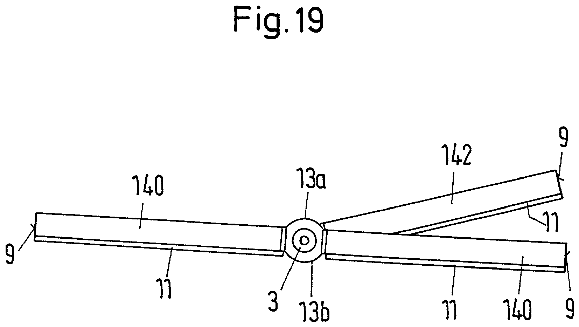

Bei der Ausführungsform gemäß Fig. 19 sind in der Richtung der Lampenachse hintereinander mehrere Hohllichtleiter 140, 142 angeordnet, die unabhängig voneinander zu der Vertikalen in einem Winkel angestellt werden können. Es kann auch vorgesehen sein, daß nur einer oder ein Teil der Hohllichtleiter, beispielsweise die mittleren Hohllichtleiter 142 angestellt werden können. Ebenso kann vorgesehen sein, daß die verschiedenen Hohllichtleiter 140, 142 zwar nicht verstellbar, aber mit festen unterschiedlichen Anstellwinkeln angeordnet sind. Es versteht sich von selbst, daß verschiedene Elemente der vorangehend skizzierten Ausführungsformen der erfindungsgemäßen Innenleuchte miteinander kombiniert werden können, beispielsweise eine schwenkbare Anordnung eines Hohllichtleiters und eine gekrümmte Ausbildung des Hohllichtleiters. Während bei den vorangehend beschriebenen Ausführungsbeispielen der Lichtleiter ein Hohllichtleiter war, was die bevorzugte Ausführungsform bildet, kann grundsätzlich auch anstelle eines Hohllichtleiters ein massiver Lichtleiter verwendet werden. Anstelle von Platten mit einer lichtbrechenden Struktur können auch entsprechend strukturierte Folien verwendet werden.

Die in der vorangehenden Beschreibung, den Ansprüchen und den Zeichnungen offenbarten Merkmale der Erfindung können sowohl einzeln als auch in beliebiger Kombination für die Verwirklichung der Erfindung in ihren verschiedenen Ausführungsformen wesentlich sein.


Bezugszeichenliste

| | |
|---|---|
| 1 | Leuchte |
| 3 | Lampe |
| 3' | Lampe |
| 5 | Hohllichtleiter |
| 6 | Hohlraum |
| 7 | Dachfläche |
| 9 | Seitenwand |
| 11 | Lichtauskoppeleinrichtung |
| 13a, 13b | Reflektor |
| 20 | Platte |
| 22 | Platte |
| 24, 24a, 24b | Prismen |
| 26, 26a, 26b | Prismen |
| 28, 28a, 28b | Vertiefung |
| 30, 30a, 30b | Vertiefung |
| 40 | Lampe |
| 42 | Reflektor |
| 42' | Reflektor, |
| 50 | Dachwand |
| 51a, 51b | Schmalseiten, |
| 52a, 52b | Schrägfläche |
| 54 | waagrechte Fläche |
| 56 | waagrechte Fläche |
| 58a, 58b | konvexer Abschnitt |
| 59a, 59b | geneigte Dachfläche |
| 60a, 60b | konkave Dachabschnitte |
| 61 | waagrechte Fläche |
| 63 | Dachfläche |
| 65a, 65b | Hohllichtleiter |
| 66 | Körper |
| 67 | Dachfläche |
| 68 | Trennwand |
| 69a, 69b | Lampe |
| 70a, 70b | Reflektor |
| 72a, 72b | geneigte Dachabschnitte |
| 74 | Prismenstruktur |
| 101 | Hohllichtleiter |

| 103 | Dachfläche |
| 120 | Hohllichtleiter |
| 130 | Hohllichtleiter |
| 140 | Hohllichtleiter |
| 142 | Hohllichtleiter |

## Patentansprüche

**1.** Innenraumleuchte mit mindestens zwei nebeneinander angeordneten Lichtleitern (5) mit einer eine Lichtaustrittsfläche aufweisenden Unterseite, einer oder mehreren Lampen (3; 40; 3'), wobei zumindest an einer zu der Unterseite nicht parallelen Seitenfläche jedes der Lichtleiter zumindest eine Lampe derart angeordnet ist, daß Licht der Lampe bzw. Lampen (3; 40; 3') über die besagten Seitenflächen der Lichtleiter in diese eingekoppelt wird, sowie mit einer Lichtauskoppeleinrichtung (11) zum Auskoppeln von Licht aus den Lichtleitern (5) zum Austritt über die besagte Lichtaustrittsfläche, **dadurch gekennzeichnet, daß** die Lichtauskoppeleinrichtung (11) in dem Lichtweg des aus der Lichtaustrittsfläche austretenden Lichts eine Grenzfläche zwischen zwei Medien mit unterschiedlichen Brechungsindizes aufweist, die mit einer lichtbrechenden Struktur versehen ist, die zumindest abschnittsweise entsprechend einem Linienmuster (28, 30) aus einer oder mehreren Linien ausgebildet ist, dessen Linie oder Linien (28, 30) einen oder mehrere längliche lichtbrechende Abschnitte (24a, 24b; 26a, 26b) auf einander gegenüberliegenden Seiten begrenzen, deren bzw. dessen Breite in der Richtung senkrecht zu den Linien kleiner als deren Länge in Richtung der Linien ist, wobei die lichtbrechende Struktur, bezogen auf eine Fläche senkrecht zu der oder den Linien, eine Abschirmung des aus der Grenzfläche austretenden Lichts oberhalb eines Grenzwinkels bezüglich einer Normalen zu der Grenzfläche erzeugt, wobei die Lichtauskoppeleinrichtung an einer zweiten Grenzfläche zwischen zwei Medien mit unterschiedlichen Brechungsindizes, die in dem Lichtweg des aus der Lichtaustrittsfläche austretenden Lichts nach der ersten Grenzfläche liegt, eine zweite lichtbrechende Struktur aufweist, die zumindest abschnittsweise entsprechend einem Linienmuster aus einer oder mehreren Linien ausgebildet ist, dessen Linie oder Linien (30) einen oder mehrere längliche lichtbrechende Abschnitte (26a, 26b) auf einander gegenüberliegenden Seiten begrenzen, deren Breite in der Richtung senkrecht zu den Linien kleiner als deren Länge in Richtung der Linien ist, wobei die zweite Struktur, bezogen auf eine Fläche senkrecht zu der oder den Linien, eine Abschirmung des aus der zweiten Grenzfläche austretenden Lichts oberhalb eines Grenzwinkels bezüglich einer Normalen zu der zweiten Grenzfläche erzeugt, wobei die Linien der zweiten Struktur relativ zu den Linien der ersten Struktur so angeordnet sind, daß das aus der Lichtaustrittsfläche der Leuchte austretende Licht zumindest in zwei nicht parallelen Ebenen senkrecht zu der Lichtaustrittsfläche jeweils oberhalb eines Grenzwinkels bezüglich einer Normalen zu der Lichtaustrittsfläche abgeschirmt wird.

**2.** Innenraumleuchte nach Anspruch 1, **dadurch gekennzeichnet, daß** die lichtlenkenden Abschnitte (24, 26) zwischen linienförmigen Vertiefungen der ersten und/oder zweiten Struktur ausgebildet und in Richtung der Linien im wesentlichen gleichförmig sind.

**3.** Innenraumleuchte nach Anspruch 1 oder 2, **dadurch gekennzeichnet, daß** die lichtlenkenden Abschnitte Prismen (24, 26) sind.

**4.** Innenraumleuchte nach Anspruch 3, **dadurch gekennzeichnet, daß** die erste und/oder zweite Struktur entsprechend einem Muster von geraden parallelen kreuzungsfreien Linien (28a, 28b, 30a, 30b) aufgebaut ist, zwischen denen sich Prismen (24a, 24b, 26a, 26b) als lichtbrechende Abschnitte befinden, deren Querschnittsprofil im wesentlichen translationsinvariant bezüglich der Richtung der Linien ist.

**5.** Innenraumleuchte nach Anspruch 3 oder 4, **dadurch gekennzeichnet, daß** eines der beiden Medien an der ersten und/oder zweiten Grenzfläche Luft ist, die Prismen (24, 26) eine im wesentlichen symmetrische Prismenkante aufweisen und der Prismenwinkel w die folgenden Relationen erfüllt:

$$w/2 \leq C$$

$$w \geq 2\ (2\ \arcsin(1/n) - 3\ w/2) + \cos(w/2))\ /\ (n\ \cos(\arcsin(1/n) - 3\ w/2) + \sin/w/2)),$$

wobei n der Brechungsindex des zweiten Mediums an der Grenzfläche und C der Abschirmwinkel der Lichtstärkeverteilung an der Grenzfläche ist.

6.  Innenraumleuchte nach einem der Ansprüche 1 bis 5, **dadurch gekennzeichnet, daß** die erste und zweite Struktur an zwei einander gegenüberliegenden Seiten einer lichtbrechenden Platte ausgebildet sind.

7.  Innenraumleuchte nach einem der Ansprüche 1 bis 6, **dadurch gekennzeichnet, daß** die Lichtauskoppeleinrichtung zwei oder mehr geschichtete plattenförmige Elemente (20, 22) aufweist, deren Grundflächen parallel zueinander angeordnet sind, wobei die erste Struktur in einer Grundfläche eines ersten plattenförmigen Elements und die zweite Struktur in einer Grundfläche eines zweiten plattenförmigen Elements ausgebildet ist.

8.  Innenraumleuchte nach Anspruch 7, **dadurch gekennzeichnet, daß** die Grundflächen des ersten und zweiten plattenförmigen Elements, an denen die erste bzw. zweite Struktur ausgebildet ist, in die gleiche Richtung weisen.

9.  Innenraumleuchte nach einem der Ansprüche 1 bis 8, **dadurch gekennzeichnet, daß** eine oder mehrere Lampen in einem Raumbereich zwischen zwei Lichtleitern angeordnet sind, welche jeweils Licht in einen oder beide Lichtleiter einkoppeln.

10. Innenraumleuchte nach einem der Ansprüche 1 bis 9, **gekennzeichnet durch** einen einer oder mehreren Lampen zugeordneten Reflektor (42, 42'), welcher Licht der Lampe bzw. der Lampen teilweise zu einer Seitenfläche eines Lichtleiters hin zum Einkoppeln in den Lichtleiter (5) reflektiert und teilweise an dem Lichtleiter (5) vorbei nach oben zur Erzeugung eines indirekten Lichtanteils der Leuchte abgibt.

11. Innenraumleuchte nach einem der Ansprüche 1 bis 10, **dadurch gekennzeichnet, daß** zumindest einer der Lichtleiter ein Hohllichtleiter (5) ist, der durch ein Gehäuse mit einem Hohlraum (6) mit reflektierenden Wänden festgelegt ist, der an einer Schmalseite zum Einkoppeln von Licht von einer oder mehreren der Lampen eingerichtet ist, an einer Seite zumindest teilweise durch die Lichtauskoppeleinrichtung (11) begrenzt ist und eine der Lichtauskoppeleinrichtung (11) gegenüberliegende Dachfläche (7) aufweist, die nach innen hin zumindest teilweise reflektierend ist.

12. Innenraumleuchte nach Anspruch 11, **dadurch gekennzeichnet, daß** der Hohllichtleiter (5) zu der oder den Lampen hin offen ist, so daß Licht von den Lampen (3, 40) direkt in den Hohlraum (6) gelangen kann.

13. Innenraumleuchte nach Anspruch 11 oder 12, **dadurch gekennzeichnet, daß** die Dachfläche (7) teilweise Licht aus dem Hohlraum (6) in die zu der Lichtaustrittsfläche entgegengesetzte Richtung zur Abgabe eines indirekten Lichtanteils auskoppelt.

14. Innenraumleuchte nach Anspruch 13, **dadurch gekennzeichnet, daß** zumindest ein reflektierender Abschnitt der Dachfläche (7) teilweise transparent ist.

15. Innenraumleuchte nach Anspruch 13 oder 14, **dadurch gekennzeichnet, daß** die Dachfläche (7) ganz oder teilweise als halbdurchlässiger Spiegel ausgebildet ist.

16. Innenraumleuchte nach einem der Ansprüche 13 bis 15, **dadurch gekennzeichnet, daß** die Dachfläche eine lichtbrechende Struktur (64) zum Auskoppeln von Licht in die der Lichtaustrittsfläche entgegengesetzte Richtung aufweist.

17. Innenraumleuchte nach einem der Ansprüche 13 bis 16, **dadurch gekennzeichnet, daß** die Dachfläche (7) abschnittsweise aus einem klaren Material besteht.

18. Innenraumleuchte nach einem der Ansprüche 13 bis 17, **dadurch gekennzeichnet, daß** die Dachfläche (7) abschnittsweise aus einem vollständig oder überwiegend reflektierenden Material besteht.

19. Innenraumleuchte nach einem der Ansprüche 11 bis 18, **dadurch gekennzeichnet, daß** die Dachfläche (7) ganz oder abschnittsweise diffus reflektierend ausgebildet ist.

20. Innenraumleuchte nach einem der Ansprüche 11 bis 19, **dadurch gekennzeichnet, daß** die Höhe des Hohlraums (6) in einem Schnitt senkrecht zu der Lampenachse einer dem Lichtleiter (5) zugeordneten Lampe (3, 40) sich zumindest in einem Teilabschnitt in der Richtung weg von dieser Lampe (3, 40) verringert.

**21.** Innenraumleuchte nach Anspruch 20, **dadurch gekennzeichnet, daß** die Höhe des Hohlraums, ausgehend von der einer Lampe (3) zugewandten Schmalseite (51a) sich in der Richtung von dieser Schmalseite weg zu einer gegenüberliegenden Schmalseite (51b; 9) hin monoton verringert.

**22.** Innenraumleuchte nach Anspruch 21, **dadurch gekennzeichnet, daß** die gegenüberliegende Schmalseite (9) reflektierend ausgebildet ist.

**23.** Innenraumleuchte nach Anspruch 19, **dadurch gekennzeichnet, daß** die Höhe des Hohlraums, ausgehend von einer Schmalseite (51a) in Richtung zu der gegenüberliegenden Schmalseite hin in einem ersten Teilabschnitt (52a; 58a) abnimmt und danach in einem zweiten Teilabschnitt (52b; 58b) zunimmt.

**24.** Innenraumleuchte nach Anspruch 23, **gekennzeichnet durch** einen Bereich (54; 56) des Hohlraums (6) mit im wesentlichen konstanter minimaler Höhe zwischen den beiden Schmalseiten.

**25.** Innenraumleuchte nach Anspruch 24, **dadurch gekennzeichnet, daß** die Dachfläche und/oder die ihr gegenüberliegende Fläche im Querschnitt die Form eines Polygonzugs aufweist.

**26.** Innenraumleuchte nach einem der Ansprüche 23 bis 25, **dadurch gekennzeichnet, daß** die Dachfläche und/oder die ihr gegenüberliegende Fläche im Querschnitt konvex gekrümmte Teilabschnitte (58a, 58b) aufweist.

**27.** Innenraumleuchte nach einem der Ansprüche 23 bis 26, **dadurch gekennzeichnet, daß** die Dachfläche (50) und/oder die ihr gegenüberliegende Fläche im Querschnitt ganz oder teilweise konkav gekrümmt ausgebildet ist.

**28.** Innenraumleuchte nach einem der Ansprüche 23 bis 27, **dadurch gekennzeichnet, daß** in der Nähe von zwei einander gegenüberliegenden Schmalseiten (51a, 51b) jeweils eine oder mehrere Lampen (3, 40) angeordnet sind, welche über diese Schmalseite Licht in den Hohlraum einkoppeln.

**29.** Innenraumleuchte nach Anspruch 28 **dadurch gekennzeichnet, daß** die Höhe des Hohlraums in einem Bereich (54, 56) zwischen den Lampen (3, 40) soweit verringert ist, daß eine Direkteinstrahlung einer Lampe (3) auf den Lichteinkoppelbereich einer gegenüberliegenden Lampe (40) verbinden oder zumindest reduziert wird.

**Claims**

**1.** Interior light with at least two light guides (5) arranged next to one another, with an underside comprising a light outlet surface, one of more lamps (3; 40; 3'), wherein, at least on one side surface not parallel to the underside, a lamp is arranged in relation to each of the light guides in such a way that light from the lamp or lamps (3; 40; 3') respectively is coupled into the light guides (5) by way of their said side surfaces, and with a light coupling-out device (11) for coupling light out of the light guides (5) to the outlet of the said light outlet surface, **characterized in that** the light coupling-out device (11) comprises, in the light path of the light emerging from the light outlet surface, a boundary surface between two media with different refractive indices, said boundary surface being provided with a light refractive structure, which is configured at least in sections corresponding to a line pattern (28, 30) of one or more lines, of which the line or lines (28, 30) delimit one or more longitudinal light-refractive segments (24a, 24b; 26a, 26b) on mutually opposing sides of which the width is smaller in the direction perpendicular to the lines than the length in the direction of the lines, wherein the light-refractive structure, related to a surface perpendicular to the line or lines, produces a screening of the light emerging from the boundary surface above a limiting angle in relation to a normal to the boundary surface, wherein the light coupling-out device comprises, at a second boundary surface between two media with different refraction indices which lies in the light path of the light emerging from the light outlet surface, a second light-refractive structure, which is configured at least in sections corresponding to a line pattern of one or more lines, of which the line or lines (30) delimit one or more longitudinal light-refractive segments (26a, 26b) on mutually opposed sides, of which the width is smaller in the direction perpendicular to the lines than the length in the direction of the lines, wherein the second structure, related to a surface perpendicular to the line or lines, produces a screening of the light emerging from the second boundary surface above a limiting angle in relation to a normal to the second boundary surface, wherein the lines of the second structure are arranged relative to the lines of the first structure in such a way that the light emerging from the light outlet surface of the lights in two non-parallel planes perpendicular to the light outlet surface in each case above a limiting angle in relation to a normal to the light outlet surface.

2. Interior light according to claim 1, **characterized in that** the light-guiding segments (24, 26) are configured between line-shaped indentations of the first and/or second structure and are essentially of the same shape in the direction of the lines.

3. Interior light according to claim 1 or 2, **characterized in that** the light-guiding segments (24, 26) are prisms.

4. Interior light according to claim 3, **characterized in that** the first and/or second structure is structured corresponding to a pattern of straight parallel crossing-free lines (28a, 28b, 30a, 30b), between which are located prisms (24a, 24b, 26a, 26b) as light-refractive sections, of which the cross-section profile is essentially translation-variant in relation to the direction of the lines.

5. Interior light according to claim 3 or 4, **characterized in that** one of the two media at the first and/or second boundary surface is air, the prisms (24, 26) comprise an essentially symmetrical prism edge, and prism angle w fulfils the following relationships:

   w/2$\leq$C

   w $\geq$ 2 (2 arcsin(1/n) - 3 w/2) + cos(w/2)) / (n cos(arcsin(1/n) - 3 w/2) + sin/w/2)), wherein n is the refractive index of the second medium at the boundary surface and C is the screening angle of the light intensity distribution at the boundary surface.

6. Interior light according to any one of claims 1 to 5, **characterized in that** the first and second structures are formed on two mutually opposed sides of a light-refractive plate.

7. Interior light according to any one of claims 1 to 6, **characterized in that** the light coupling-out device comprises two or more coated plate-shaped elements (20, 22), of which the base surfaces are arranged parallel to one another, wherein the first structure is formed in a base surface of a first plate-shaped element and the second structure is formed in a base surface of a second plate-shaped element.

8. Interior light according to claim 7, **characterized in that** the base surfaces of the first and second plate-shaped elements, at which the first and second structures respectively are formed, point in the same direction.

9. Interior light according to any one of claims 1 to 8, **characterized in that** one or more lamps are arranged in a spatial region between two light guides, which in each case couple light into one or both light guides.

10. Interior light according to any one of claims 1 to 9, **characterized by** a reflector (42, 42') allocated to one or more lamps, which reflects light from the lamp or lamps partially to a side surface of a light guide for coupling into the light guide (5), and partially emits light upwards past the light guide (5), to produce an indirect light portion of the light.

11. Interior light according to any one of claims 1 to 10, **characterized in that** at least one of the light conductors is a hollow light conductor (5), which is secured by a housing with a cavity space (6) with reflecting walls, and which is configured at a narrow side such as to couple in light from one or more of the lamps, is delimited on one side at least partially by the light coupling-out device (11) and comprises a roof surface (7) located opposite the light coupling-out device (11), which is at least partially reflecting inwards.

12. Interior light according to claim 11, **characterized in that** the hollow light conductor (5) is open towards the lamp or lamps, such that light from the lamps (3, 40) can pass directly into the cavity space (6).

13. Interior light according to claim 11 or 12, **characterized in that** the roof surface (7) partially couples out light from the cavity space (6) in the direction opposite to the light outlet surface in order to emit an indirect light portion.

14. Interior light according to claim 13, **characterized in that** at least one reflecting section of the roof surface (7) is partially transparent.

15. Interior light according to claim 13 or 14, **characterized in that** the roof surface (7) is formed wholly or partially as a semi-permeable mirror

16. Interior light according to any one of claims 13 to 15, **characterized in that** the roof surface comprises a light-refractive structure (64) for coupling out light in the direction opposite to the light outlet surface.

**17.** Interior light according to any one of claims 13 to 16, **characterized in that** the roof surface (7) consists in sections of a clear material.

**18.** Interior light according to any one of claims 13 to 17, **characterized in that** the roof surface (7) consists in sections of a completely or predominantly reflecting material.

**19.** Interior light according to any one of claims 11 to 18, **characterized in that** the roof surface (7) is configured wholly or in sections as diffuse-reflecting.

**20.** Interior light according to any one of claims 11 to 19, **characterized in that** the height of the cavity space (6), in a segment perpendicular to the lamp axis of a lamp (3, 40) allocated to the light conductor (5) is reduced at least in a part section in the direction away from this lamp (3, 40).

**21.** Interior light according to claim 20, **characterized in that** the height of the cavity space, starting from a narrow side (51a) facing away from the lamp (3), is reduced monotonously in the direction away from this narrow side towards an opposing narrow side (51b; 9).

**22.** Interior light according to claim 21, **characterized in that** the opposing narrow side (9) is configured as reflecting.

**23.** Interior light according to claim 19, **characterized in that** the height of the cavity space, starting from a narrow side (51 a) decreases in the direction towards the opposing narrow side in a first part segment (52a; 58a) and thereafter increases in a second part segment (52b; 58b).

**24.** Interior light according to claim 23, **characterized by** a region (54; 56) of the hollow cavity (6) with an essentially constant minimum height between the two narrow sides.

**25.** Interior light according to claim 24, **characterized in that** the roof surface and/or the surface opposing this exhibits in cross-section the shape of a polygon traverse.

**26.** Interior light according to any one of claims 23 to 25, **characterized in that** the roof surface and/or the opposing surface comprises part segments (58a, 58b) which are convex-cambered in cross-section.

**27.** Interior light according to any one of claims 23 to 26, **characterized in that** the roof surface (50) and/or the opposite surface is configured in cross-section as wholly or partially concave-cambered.

**28.** Interior light according to any one of claims 23 to 27, **characterized in that**, arranged in the vicinity of two opposing narrow sides (51a, 51 b) in each case are one or more lamps (3, 40), which couple light via this narrow side into the hollow cavity.

**29.** Interior light according to claim 28, **characterized in that** the height of the hollow cavity is reduced in a region (54. 56) between the lamps (3, 40) to such an extent that a direct beaming of a lamp (3) onto the light coupling-in region of an opposing lamp (40) is prevented or at least reduced.

**Revendications**

**1.** Luminaire intérieur avec au moins deux conducteurs optiques (5) juxtaposés, avec un côté inférieur présentant une surface de sortie de lumière, une ou plusieurs lampes (3 ; 40 ; 3'), moyennant quoi, au moins au niveau d'une surface latérale non parallèle au côté inférieur de chacun des conducteurs optiques, une lampe est disposée de façon à ce que la lumière de la ou des lampes (3 ; 40 ; 3') soit introduite par l'intermédiaire desdites surfaces latérales des conducteurs optiques dans ceux-ci, ainsi qu'avec un dispositif de sortie de lumière (11) permettant de faire sortie la lumière hors des conducteurs optiques (5) vers la sortie par l'intermédiaire de ladite surface de sortie de lumière, **caractérisé en ce que** le dispositif de sortie de lumière (11) comprend, dans le trajet de la lumière sortant de la surface de sortie de lumière, une interface entre deux milieux avec des indices de réfraction différents, qui sont munis d'une structure à réfringente qui est conçue au moins partiellement selon un modèle à lignes (28, 30) constitué d'une ou plusieurs lignes, dont la ligne ou les lignes (28, 30) délimitent une ou plusieurs portions réfringentes allongées (24a, 24b ; 26a, 26b) sur des côtés opposés, dont la largeur perpendiculairement aux lignes est inférieure à la longueur en direction des lignes, la structure réfringente générant, par rapport à une surface perpendiculaire à la ou aux lignes, un blindage de la lumière sortant de l'interface au-dessus d'un angle limite par rapport à la normale à l'interface, le dispositif de sortie de lumière comprenant, au niveau d'une interface entre deux milieux avec des indices de réfraction différents, qui se trouve dans le trajet de la lumière sortant de la surface de sortie de lumière après la première interface, une deuxième structure réfringente qui est conçue au moins partiellement selon un modèle à lignes constitué d'une ou plusieurs lignes, dont la ligne ou les lignes (30) délimitent une ou plusieurs portions réfringentes allongées (26a, 26b) sur des côtés opposés entre eux, dont la largeur perpendiculairement aux lignes est inférieure à la longueur dans la direction des lignes, la deuxième structure générant, par rapport à une surface perpendiculaire à la ou aux lignes, un blindage de la lumière sortant de la deuxième interface au-dessus d'un angle limite par rapport à une normale à la deuxième interface, les lignes de la deuxième structure étant disposées par rapport aux lignes de la première structure de façon à ce que la lumière sortant de la surface de sortie de lumière du luminaire soit blindée au moins deux plans non parallèles perpendiculaires à la surface de sortie de lumière au-dessus d'un angle limite par rapport à une normale à la surface de sortie de lumière.

2. Luminaire intérieur selon la revendication 1, **caractérisé en ce que** les portions déflectrices (24, 26) sont réalisées entre des creux linéaires de la première et/ou de la deuxième structure et présentent globalement la même forme en direction des lignes.

3. Luminaire intérieur selon la revendication 1 ou 2, **caractérisé en ce que** les portions déflectrices sont des prismes (24, 26).

4. Luminaire intérieur selon la revendication 3, **caractérisé en ce que** la première et/ou la deuxième structure est conçue selon un modèle de lignes droites parallèles sans croisements (28a, 28b, 30a, 30b), entre lesquelles se trouvent des prismes (24a, 24b, 26a, 26b) en tant que portions réfringentes, dont le profil de section est globalement invariant en translation par rapport à la direction des lignes.

5. Luminaire intérieur selon la revendication 3 ou 4, **caractérisé en ce qu'**un des deux milieux au niveau de la première et/ou de la deuxième interface est de l'air, les prismes (24, 26) présentent une arête de prisme globalement symétrique et l'angle de prisme w remplit les conditions suivantes :

$$w/2 \leq C$$

$$w \geq 2\ (2\ \arcsin\ (1/n) - 3\ w/2) + \cos(w/2))\ /\ (n \cos\ (\arcsin\ (1/n) - 3\ w/2) + \sin\ w/2)),$$

n étant l'indice de réfraction du deuxième milieu au niveau de l'interface et C étant l'angle de blindage de la répartition d'intensité lumineuse au niveau de l'interface.

6. Luminaire intérieur selon l'une des revendications 1 à 5, **caractérisé en ce que** la première et la deuxième structure sont réalisées au niveau de côtés opposés d'une plaque réfringente.

7. Luminaire intérieur selon l'une des revendications 1 à 6, **caractérisé en ce que** le dispositif de sortie de lumière comprend deux éléments en forme de plaques revêtus (20, 22) dont les surfaces de base sont parallèles entre elles, la première structure étant réalisée dans une surface de base d'un premier élément en forme de plaque et la deuxième structure étant réalisée dans une surface de base d'un deuxième élément en forme de plaque.

8. Luminaire intérieur selon la revendication 7, **caractérisé en ce que** les surfaces de base du premier et du deuxième élément en forme de plaque, sur lesquelles est réalisée la première ou la deuxième structure, sont orientées dans la même direction.

9. Luminaire intérieur selon l'une des revendications 1 à 8, **caractérisé en ce qu'**une ou plusieurs lampes sont disposées dans une zone entre deux conducteurs optiques, qui introduisent chacun de la lumière dans un ou dans les deux conducteurs de lumière.

10. Luminaire intérieur selon l'une des revendications 1 à 9, **caractérisé par** un réflecteur (42, 42') correspondant à une ou plusieurs lampes, qui réfléchit la lumière de la ou des lampes partiellement vers une surface latérale d'un conducteur optique afin de l'introduire dans le conducteur de lumière (5) et émet une lumière partiellement le long du conducteur optique vers le haut pour la production d'une composante de lumière indirecte du luminaire.

**11.** Luminaire intérieur selon l'une des revendications 1 à 10, **caractérisé en ce qu'**au moins un des conducteurs optiques est un conducteur optique creux (5), qui est fixé à travers un boîtier avec un espace creux (6) avec des parois réfléchissantes, qui est conçu, au niveau d'un côté étroit, pour l'introduction de la lumière provenant d'une ou plusieurs des lampes, qui est limité, au niveau d'un côté, au moins partiellement par le dispositif de sortie de lumière (11) et qui comprend une surface de toit (7) opposée au dispositif de sortie de lumière (11), qui est au moins partiellement réfléchissante vers l'intérieur.

**12.** Luminaire intérieur selon la revendication 11, **caractérisé en ce que** le conducteur optique creux (5) est ouvert en direction de la ou des lampes, de façon à ce que la lumière provenant des lampes (3, 40) puisse arriver directement dans l'espace creux (6).

**13.** Luminaire intérieur selon la revendication 11 ou 12, **caractérisé en ce que** la surface de toit (7) permet de faire sortir la lumière de l'espace creux (6) dans la direction opposée à la surface de sortie de lumière pour l'émission d'une composante lumineuse indirect.

**14.** Luminaire intérieur selon la revendication 13, **caractérisé en ce qu'**au moins une portion réfléchissante de la surface de toit (7) est partiellement transparente.

**15.** Luminaire intérieur selon la revendication 13 ou 14, **caractérisé en ce que** la surface de toit (7) est conçue entièrement ou partiellement comme un miroir semi-transparent.

**16.** Luminaire intérieur selon l'une des revendications 13 à 15, **caractérisé en ce que** la surface de toit comprend une structure réfringente (64) pour la sortie de lumière dans la direction opposée à la surface de sortie de lumière.

**17.** Luminaire intérieur selon l'une des revendications 13 à 16, **caractérisé en ce que** la surface de toit (7) est constituée partiellement d'un matériau transparent.

**18.** Luminaire intérieur selon l'une des revendications 13 à 17, **caractérisé en ce que** la surface de toit (7) est constituée partiellement d'un matériau entièrement ou majoritairement réfléchissant.

**19.** Luminaire intérieur selon l'une des revendications 11 à 18, **caractérisé en ce que** la surface de toit (7) est conçue entièrement ou partiellement de manière réfléchissante diffusément.

**20.** Luminaire intérieur selon l'une des revendications 11 à 19, **caractérisé en ce que** la hauteur de l'espace creux (6), en coupe perpendiculaire à l'axe d'une lampe (3, 40) correspondant au conducteur optique (5), diminue au moins dans une portion en s'éloignant de cette lampe (3, 40).

**21.** Luminaire intérieur selon la revendication 20, **caractérisé en ce que** la hauteur de l'espace creux diminue de manière monotone à partir d'un côté étroit (51 a) orienté vers une lampe (3), en s'éloignant de ce côté étroit vers un côté étroit opposé (51b ; 9).

**22.** Luminaire intérieur selon la revendication 21, **caractérisé en ce que** le côté étroit (9) opposé est conçu de manière réfléchissante.

**23.** Luminaire intérieur selon la revendication 19, **caractérisé en ce que** la hauteur de l'espace creux diminue de manière monotone à partir d'un côté étroit (51a) en direction du côté étroit opposé dans une première portion (52a ; 58a) puis augmente dans une deuxième portion (52b ; 58b).

**24.** Luminaire intérieur selon la revendication 23, **caractérisé par** une zone (54 ; 56) de l'espace creux (6) avec une hauteur minimale globalement constante entre les deux côtés étroits.

**25.** Luminaire intérieur selon la revendication 24, **caractérisé en ce que** la surface de toit et/ou la surface opposée présente, en coupe transversale, la forme d'un polygone.

**26.** Luminaire intérieur selon l'une des revendications 23 à 25, **caractérisé en ce que** la surface de toit et/ou la surface opposée présente des portions (58a, 58b) incurvées de manière convexe en coupe transversale.

**27.** Luminaire intérieur selon l'une des revendications 23 à 26, **caractérisé en ce que** la surface de toit (50) et/ou la surface opposée est conçue de manière incurvée entièrement ou partiellement concave en coupe transversale.

**28.** Luminaire intérieur selon l'une des revendications 23 à 27, **caractérisé en ce que**, à proximité de deux côtés étroits opposés (51 a, 51 b), sont disposées une ou plusieurs lampes (3, 40) qui introduisent la lumière dans l'espace creux par ce côté étroit.

**29.** Luminaire intérieur selon la revendication 28, **caractérisé en ce que** la hauteur de l'espace creux diminue, dans une zone (54, 56) entre les lampes (3, 40) de façon à ce qu'un rayonnement direct d'une lampe (3) arrive sur la zone d'introduction de lumière d'une lampe opposée (40) ou est au moins réduit.

# Fig.1

# Fig. 2

Fig. 3

Fig. 4

Fig. 5

# Fig.6

# Fig.15

# Fig.14

Fig.7

Fig.8

Fig.9

Fig.12

## Fig.10

59a
59b
6
20
22

## Fig.11

60a
61
60b
6
20
22

## Fig.13

70a
65a
67
65b
66
70b
68
69b
69a
20
22

## Fig.16

## Fig.17

## Fig.18

# Fig.19

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0846915 A1
- US PS5396350 A
- US PS5555109 A
- EP 0819970 A1
- US 5863114 A
- US 5046805 A
- US 5530628 A
- US 5555109 A